# EUROPÄISCHE PATENTSCHRIFT

(11) **EP 0 889 810 B1**
(45) Veröffentlichungstag und Bekanntmachung des Hinweises auf die Patenterteilung: **23.08.2000**
(21) Anmeldenummer: 97920743.8
(22) Anmeldetag: 23.04.1997
(51) Int. Cl.: B60R 22/18, B60R 22/44

(54) **FAHRZEUG MIT EINEM AM FAHRZEUGBODEN BEFESTIGTEN GURTSTRAFFER**
VEHICLE WITH A SEAT BELT TENSIONER SECURED TO THE FLOOR OF THE VEHICLE
VEHICULE EQUIPE D'UN TENDEUR DE SANGLE FIXE AU PLANCHER DE CE VEHICULE

(30) Priorität: 23.04.1996 DE 29607362 U
(43) Veröffentlichungstag der Anmeldung: 13.01.1999
(73) Patentinhaber: TRW Occupant Restraint Systems GmbH & Co. KG, 73551 Alfdorf (DE)
(72) Erfinder: WIER, Franz, D-73571 Göggingen (DE)
(74) Vertreter: Kitzhofer, Thomas, Dipl.-Ing.
(86) Internationale Anmeldenummer: EP9702068
(87) Internationale Veröffentlichungsnummer: WO9739921

(56) Entgegenhaltungen:
- FR-A- 2 104 446
- FR-A- 2 239 870
- GB-A- 1 571 505
- US-A- 5 366 245

## Beschreibung

Die Erfindung betrifft ein Fahrzeug, mit einem Fahrzeugboden, einem Gurtstraffer, welcher eine Kolben/Zylinder-Einheit umfaßt, und einer Einrichtung zum Befestigen des Zylinders am Fahrzeugboden.

Bislang werden Gurtstraffer beispielsweise durch Vorsehen eines an dem Zylinder angeschweißten Flansches am Fahrzeug befestigt, wobei dieser Flansch in einem gabelförmigen, am Fahrzeugboden verschraubten Teil arretiert ist. Eine solche gattungsgemäße Anordnung ist in der FR-A-2 104 446 gezeigt. Unabhängig davon, ob der Flansch seitlich oder an der dem Gurtangriffsmittel abgewandten Stirnseite des Zylinders angebracht ist, wird durch diese Art der Befestigung der für den Einbau des Zylinders erforderliche Raum im Fahrzeug erhöht. Aufgrund der erheblichen axialen Länge eines Gurtstraffers ist es bislang notwendig, diesen mit einem Seilumlenker im Fahrzeug einzubauen, da ansonsten das Gurtangriffsmittel, im Normalfall das Gurtschloß, zu weit nach oben, teilweise bis über die Sitzfläche ragt. Gerade durch Verwendung eines Seilumlenkers wird jedoch der erforderliche Einbauraum zusätzlich vergrößert, was die Unterbringung im Fahrzeug noch weiter erschwert.

Die Erfindung schafft ein Fahrzeug, bei dem die Unterbringung des Gurtstraffers deutlich erleichtert wird und der im Fahrzeuginnenraum vom Gurtstraffer eingenommene Raum gering bleibt. Dies wird bei einem Fahrzeug der eingangs genannten Art dadurch erreicht, daß der Fahrzeugboden eine Ausnehmung aufweist, in die der Zylinder wenigstens teilweise ragt. Der Gurtstraffer muß deshalb nicht vollständig im Fahrzeuginneren angeordnet sein, sondern ragt in die für ihn vorgesehene Ausnehmung, so daß der in axialer Richtung des Gurtstraffers für ihn zur Verfügung stehende Einbauraum vergrößert wird. Bislang vorgesehene, teure Maßnahmen zur Verkürzung des Gurtstraffers unter Beibehaltung eines möglichst langen Straffweges können entfallen, was den Gurtstraffer insgesamt günstiger macht. Durch diese Art der Unterbringung des Gurtstraffers im Fahrzeug ist es auch möglich, den Gurtstraffer ohne Seilumlenker in das Fahrzeug einzubauen.

Gemäß einer bevorzugten Ausführungsform ist die Ausnehmung so gestaltet und die Lagen der Befestigungseinrichtung und des Zylinders so aufeinander abgestimmt, daß die Mittelachse des Zugübertragungsmittels, das den Kolben mit einem Gurtangriffsmittel verbindet, im wesentlichen dem Gurtverlauf bei angelegtem Sicherheitsgurt entspricht. Damit wird eine geradlinige Krafteinleitung in das Zugübertragungsmittel gewährleistet, so daß kaum seitliche Kräfte auf es im Rückhaltefall oder im normalen Fahrbetrieb bei angelegtem Sicherheitsgurt einwirken.

Die Ausnehmung im Fahrzeug kann eine sich nach unten erstreckende Mulde, die offen oder geschlossen ist oder eine Durchgangsöffnung sein, wobei der Zylinder bei einer nach unten offenen Ausnehmung mit seinem unteren Ende aus dieser herausragen kann.

Einfache Arten der Befestigung des Gurtstraffers am Fahrzeugboden sind beispielsweise das Vorsehen eines an der Außenseite des Zylindermantels von diesem radial abstehenden Befestigungmittels, das wiederum am Fahrzeugboden arretiert ist. Das Befestigungsmittel kann ein radialer Flansch oder auch ein Außengewinde sein, mit dem der Zylinder in ein Gegengewinde in der Ausnehmung im Fahrzeugboden oder einer am Fahrzeugboden befestigten Mutter eingedreht werden kann. Bei dieser Art der Befestigung müssen keine separaten Teile zur Montage des Gurtstraffers zugeführt werden, was die Herstellungs- und Montagekosten insgesamt verringert.

Eine weitere einfache Befestigungsmöglichkeit besteht im Vorsehen eines Bajonettverschlusses, wobei am Fahrzeugboden eine Bajonettfassung ausgebildet ist, in die der Zylinder mit einem nach außen ragenden Flansch einführbar und drehbar ist.

Weitere Merkmale und Vorteile der Erfindung ergeben sich aus der nachfolgenden Beschreibung und den nachfolgenden Zeichnungen, auf die Bezug genommen wird. In den Zeichnungen zeigen:
Figur 1 einen Schnitt durch den Bereich des Fahrzeugbodens des erfindungsgemäßen Fahrzeugs, in dem der Gurtstraffer eingebaut ist, gemäß einer ersten Ausführungsform, wobei der Gurtstraffer mit einer Schutzkappe an seinem unteren Ende ausgestattet ist;
Figur 2 einen Figur 1 entsprechenden Schnitt durch den Fahrzeugboden mit eingebautem Gurtstraffer, gemäß einer zweiten Ausführungsform, wobei letzterer jedoch keine Schutzkappe aufweist;
Figur 3 das untere Ende des durch einen Bajonettverschluß mit dem Fahrzeugboden verbundenen Gurtstraffers, gemäß einer dritten Ausführungsform des erfindungsgemäßen Fahrzeugs;
Figur 4 eine Ansicht in Richtung des Pfeiles A in Figur 3;
Figur 5 eine Schnittansicht durch den Fahrzeugboden des Fahrzeugs gemäß einer dritten Ausführungsform, wobei eine Mutter in die Ausnehmung eingesetzt ist;
Figur 6 eine Schnittansicht durch den Fahrzeugboden des erfindungsgemäßen Fahrzeugs gemäß einer vierten Ausführungsform, bei der eine Hülse mit Außengewinde als Befestigungsmittel in die Vertiefung eingesetzt ist;
Figur 7 eine Schnittansicht durch den Fahrzeugboden des Fahrzeugs gemäß einer fünften Ausführungsform, wobei an der Außenseite des Rohres ein radial abstehender Befestigungsflansch vorgesehen ist; und
Figur 8 eine Schnittansicht durch einen Fahrzeugboden gemäß einer weiteren Ausführungsform, mit einem daran befestigten Gurtstraffer, quer zur Fahrtrichtung.

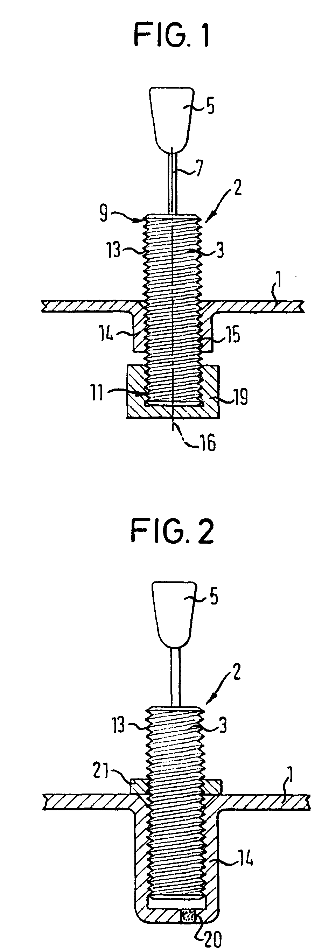

In Figur 1 ist der Bereich des Fahrzeugbodens 1 gezeigt, in welchem ein Gurtstraffer 2 in Form eines Linearschloßstraffers befestigt ist. Der Straffer 2 umfaßt eine Kolben/Zylinder-Einheit, von der nur der Zylinder 3 zu sehen ist. Ein Gurtschloß 5 als Gurtangriffseinrichtung ist durch ein Zugübertragungsmittel 7 in Form eines Zugseiles mit dem Kolben verbunden. Der Zylinder 3 hat zwei axiale Enden, nämlich ein dem Gurtschloß 5 zugewandtes, oberes Ende 9 sowie ein diesem abgewandtes, unteres Ende 11. An der Außenseite des Zylindermantels ist ein Gewinde 13 geformt, das zu einer Einrichtung zum Befestigen des Zylinders 3 am Fahrzeugboden 1 gehört. Damit der Straffer möglichst wenig in den Fahrzeuginnenraum ragt, hat der Fahrzeugboden 1 eine Ausnehmung in Form einer nach unten offenen Mulde 14 mit einem Gegengewinde 15 als Teil der Einrichtung zum Befestigen des Zylinders 3, in das der Zylinder 3 eingedreht ist. Da sich das Gewinde 13 über den gesamten Zylindermantel erstreckt, kann der Straffer mehr oder weniger tief in den Fahrzeugboden 1 eingedreht werden. Bei dieser Art der Befestigung des Straffers im Fahrzeug ist für die Unterbringung des Straffers nur noch ein geringer Bauraum im Fahrzeuginnenraum notwendig.

Der Zylinder 3 ragt mit seinem unteren Ende 11 nach unten aus der Mulde 14 im Fahrzeugboden 1 heraus. Eine auf das Ende 11 aufgedrehte Schutzkappe 19 verhindert eine Beschädigung des Zylinders 3 durch Einflüsse wie Steinschlag oder Korrosion.

Da die Stirnseite des Zylinders 3 am unteren Ende 11 offen ist, wird die Schutzkappe 19 beim Rückstrammvorgang vom Zylinder 3 weggerissen. Die zum Wegreißen der Schutzkappe 19 erforderliche Kraft wird vom Kolben aufgebracht, indem er Gase im Inneren des Zylinders verdrängt oder indem er am Ende des Straffwegs gegen die Schutzkappe 19 stößt.

Die Mittelachse der durch die Mulde 14 gebildeten Ausnehmung fluchtet mit der Mittelachse 16 des Zylinders 3 und der des Zugübertragungsmittels 7. Diese Mittelachse muß nicht zwingend rechtwinkelig zur dem Fahrzeuginnenraum zugewandten Oberfläche des Fahrzeugbodens 1 stehen, sondern kann auch schräg zu ihr ausgerichtet sein, und ist auf den Gurtbandverlauf so abgestimmt, daß eine möglichst lineare Krafteinleitung vom Gurt über das Gurtschloß 5 in das Zugübertragungsmittel 7 erreicht wird. Aus Sicht eines Fahrzeuginsassen ist die Mittelachse 16 vorzugsweise nach vorn und aufwärts gerichtet, so daß das Zugübertragungsmittel 7 bei angelegtem Sicherheitsgurt seitlich nicht allzu stark belastet wird.

Bei der in Figur 2 dargestellten Ausführungsform ist die Mulde 14 geschlossen, so daß die Schutzkappe 19 überflüssig ist. Der Zylinder 3, der in die Mulde 14 hineinragt, ist nach außen hin vollständig geschützt. Eine Verdrehsicherung 21 in Form einer Kontermutter sichert die axiale und radiale Lage des Gurtstraffers 2. Eine Entlüftungsöffnung 20 am Boden der Mulde ist mit einer elastischen Dichtungsmasse verschlossen, die aufgrund des Gasdrucks bei betätigtem Gurtstraffer entfernt wird und die Entlüftungsöffnung 20 freilegt.

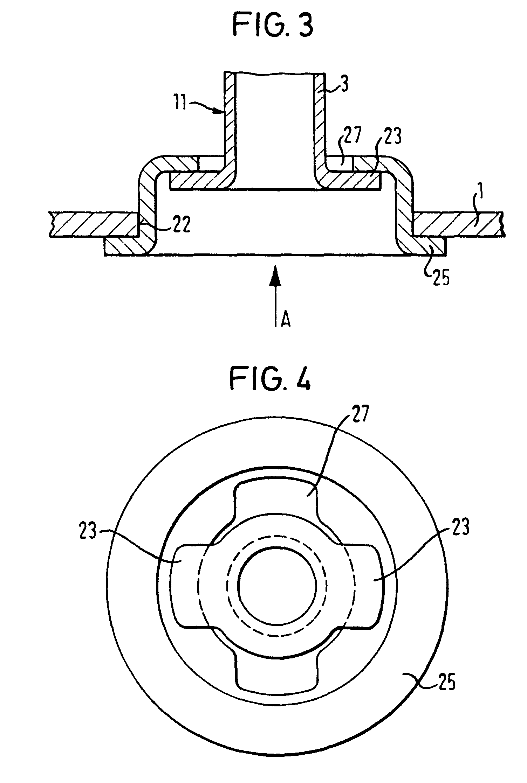

Bei der in Figur 3 gezeigten Ausführungsform des Gurtstraffers 2 hat dieser an seinem unteren Ende 11 zwei gegenüberliegende, radial abstehende Flansche 23, die der Befestigung des Gurtstraffers in einer Durchgangsöffnung 22 im Fahrzeugboden 1 dienen. In die Durchgangsöffnung 22 ist ein topfartiges, zur Befestigungseinrichtung gehörendes Teil 25 eingepresst, die eine Bajonettfassung darstellt. Das Teil 25 weist eine Ausnehmung 27 auf, deren Außenkontur der des Zylinders 3 samt den Flanschen 23 angepaßt ist, die ein Einstecken des Zylinders 3 vom Fahrzeuginnenraum her erlaubt und nach Verdrehen des Zylinders um 90° ein Herausziehen desselben verhindert. Die Einrichtung zur Befestigung des Zylinders 3 ist somit als Bajonettverschluß ausgebildet, die ein schnelles Arretieren des Zylinders im Fahrzeugboden 1 erlaubt. Die Flansche 23 werden durch seitliches Umbiegen des Zylindermantels gebildet. Das Teil 25 kann auch nach unten hin durch eine Wandung, die gleichzeitig als Auflage für die Flansche 23 dient, geschlossen sein. Ferner kann beispielsweise eine Rasteinrichtung vorgesehen sein, die als Verdrehsicherung dient, wie es bei Bajonettverschlüssen üblich ist.

Darüber hinaus kann das topfartige Teil 25 auch von oben in die Durchgangsöffnung 22 eingeführt sein, wodurch der Straffer 2 tiefer angeordnet ist und weniger ins Innere des Fahrzeugs ragt. Bei der in Figur 3 dargestellten Ausführungsform ist der Zylinder 3 nach unten hin stirnseitig offen.

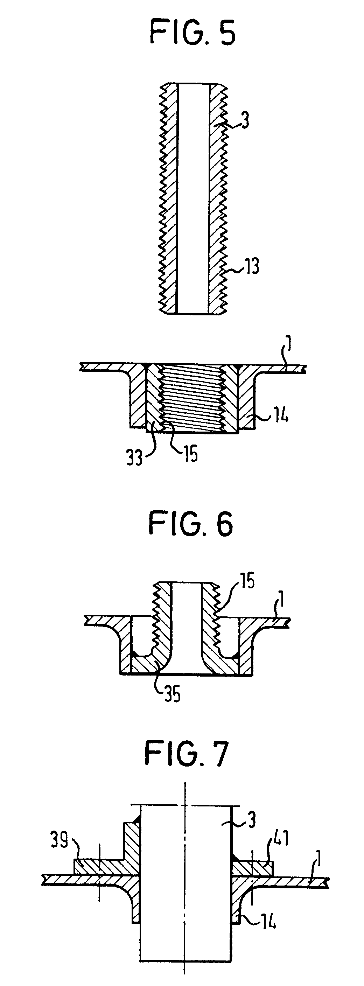

Anstatt des Vorsehens eines Gegengewindes 15 in der Mulde 14 und damit im Bodenblech selbst, ist bei der Ausführungsform nach Figur 5 eine Mutter 33 in die Mulde 14 eingelegt und mit dem Bodenblech 1 verschweißt.

Bei der in Figur 6 dargestellten Ausführungsform ist eine Hülse mit einem Außengewinde 15 in die Mulde 14 eingelegt und mit dem Bodenblech 1 verschweißt, und der nicht gezeigte Zylinder 3 weist eine nach unten offene Stirnseite sowie innenseitig ein Innengewinde auf, mit dem er auf das Gewinde 15 geschraubt wird.

Weitere Möglichkeiten der Befestigung des Straffers am Fahrzeugboden 1 sind in Figur 7 gezeigt. Gemäß der linken Hälfte von Figur 7 ist ein mit dem Zylinder 3 verbundener L-förmiger Flansch 39 vorgesehen, der am Fahrzeugboden 1 aufliegt und mit ihm verschraubt ist.

Die in der rechten Hälfte von Figur 7 dargestellte Einrichtung zur Befestigung des Zylinders 3 am Fahrzeugboden 1 wird durch einen Ringflansch, also durch eine ringförmige Scheibe, die am Zylinder 3 angeschweißt ist, gebildet. Über den Flansch 41 wird der Zylinder 3 mit dem Fahrzeugboden verschraubt.

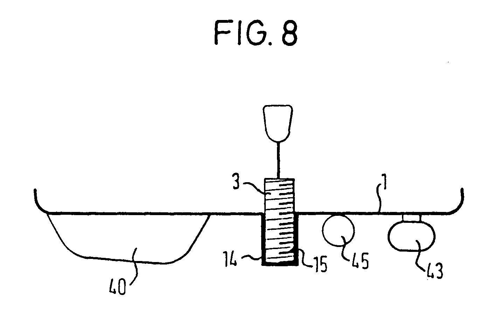

In Figur 8 ist dargestellt, an welcher Stelle die Ausnehmung zur Unterbringung des Gurtstraffers am geeignetsten angeordnet ist. Von der Unterseite des Fahrzeugbodens 1 stehen nach unten Fahrzeugbodenabschnitte, z.B. für den Fahrzeugtank 40 vor. Ferner sind unterhalb des Fahrzeugbodens angeordnete Fahrzeugteile wie Auspuff 43 und Kardanwelle 45 (falls vorhanden) vorgesehen. Zwischen einem oder mehreren solcher vorstehenden Fahrzeugbodenabschnitten und Fahrzeugteilen sollte die Ausnehmung für den Gurtstraffer vorgesehen sein. Eine vorteilhafte Lage der Ausnehmung, in die der Gurtstraffer hineinragt, ist zwischen dem Tank 40, der Kardanwelle 45 und dem Auspuff 43. Der Tank 40 kann darüber hinaus beispielsweise um die Vertiefung herum angeordnet sein. Diese Anordnung soll die Mulde oder den aus dem Fahrzeugboden herausragenden Gurtstraffer vor Einflüssen wie Steinschlag, Korrosion oder dergleichen schützen.

## Patentansprüche

1. Fahrzeug, mit einem Fahrzeugboden (1), einem Gurtstraffer (2), welcher eine Kolben/Zylinder-Einheit umfaßt, und einer Einrichtung zum Befestigen des Zylinders (3) am Fahrzeugboden (1), dadurch gekennzeichnet, daß der Fahrzeugboden (1) eine Ausnehmung aufweist, in die der Zylinder (3) wenigstens teilweise ragt.

2. Fahrzeug nach Anspruch 1, dadurch gekennzeichnet, daß die Ausnehmung so gestaltet und die Lagen der Befestigungseinrichtung und des Zylinders (3) so aufeinander abgestimmt sind, daß die Mittelachse (16) eines Zugübertragungsmittels, das den Kolben mit einer Gurtangriffseinrichtung verbindet, im wesentlichen dem Verlauf des angelegten Sicherheitsgurts entspricht.

3. Fahrzeug nach einem der vorstehenden Ansprüche, dadurch gekennzeichnet, daß die Ausnehmung eine sich nach unten erstreckende Mulde (14) im Fahrzeugboden (1) ist.

4. Fahrzeug nach Anspruch 3, dadurch gekennzeichnet, daß die Mulde nach unten geschlossen ist.

5. Fahrzeug nach Anspruch 4, dadurch gekennzeichnet, daß die Mulde eine Entlüftungsöffnung (20) hat.

6. Fahrzeug nach Anspruch 5, dadurch gekennzeichnet, daß die Entlüftungsöffnung (20) abgedichtet ist und erst im Rückhaltefall freigelegt wird.

7. Fahrzeug nach Anspruch 1 oder 2, dadurch gekennzeichnet, daß die Ausnehmung eine Durchgangsöffnung (22) ist.

8. Fahrzeug nach einem der vorstehenden Ansprüche, dadurch gekennzeichnet, daß der Zylinder (3) ein unteres Ende (11) aufweist, welches nach unten aus der Ausnehmung herausragt.

9. Fahrzeug nach Anspruch 8, dadurch gekennzeichnet, daß das nach unten aus der Ausnehmung ragende Ende (11) durch eine Schutzkappe (19) wenigstens teilweise abgedeckt ist.

10. Fahrzeug nach Anspruch 9, dadurch gekennzeichnet, daß der Zylinder (3) an seinem unteren, stirnseitigen Ende (11) offen ist und der Kolben beim Straffvorgang eine Kraft auf die Schutzkappe (19) ausübt, die die Schutzkappe (19) vom Zylinder (3) wegreißt.

11. Fahrzeug nach einem der vorstehenden Ansprüche, dadurch gekennzeichnet, daß an der Außenseite des Zylindermantels ein radial abstehendes Befestigungsmittel (13; 23; 39; 41) als Teil der Befestigungseinrichtung vorgesehen ist, das am Fahrzeugboden (11) arretiert ist.

12. Fahrzeug nach Anspruch 11, dadurch gekennzeichnet, daß das Befestigungsmittel ein radialer Flansch (39; 41) ist.

13. Fahrzeug nach Anspruch 12, dadurch gekennzeichnet, daß der Flansch (39; 41) auf der Oberseite des Fahrzeugbodens (1) aufliegt und am Fahrzeugboden (1) verschraubt ist.

14. Fahrzeug nach Anspruch 12, dadurch gekennzeichnet, daß das Befestigungsmittel ein auf dem Zylindermantel außenseitig vorgesehenes Gewinde (13) ist, das in ein fahrzeugbodenfestes Teil eingeschraubt ist.

15. Fahrzeug nach Anspruch 14, dadurch gekennzeichnet, daß die Ausnehmung ein zum Gewinde (13) entsprechendes Gegengewinde (15) aufweist, in das der Zylinder (3) eingeschraubt werden kann.

16. Fahrzeug nach Anspruch 15, dadurch gekennzeichnet, daß das Gegengewinde (15) durch eine am Fahrzeugboden (1) befestigte Mutter (33) gebildet ist.

17. Fahrzeug nach einem der Ansprüche 1 bis 15, dadurch gekennzeichnet, daß der Zylinder (3) nach unten hin stirnseitig offen ist und an seinem Zylindermantel innenseitig ein Gewinde (15) hat, mit dem er auf einen schraubenartigen Fortsatz (35) am Fahrzeugboden (1) gedreht ist.

18. Fahrzeug nach einem der Ansprüche 1 bis 11, dadurch gekennzeichnet, daß die Befestigungseinrichtung als Bajonettverschluß ausgebildet ist.

19. Fahrzeug nach Anspruch 18, dadurch gekennzeichnet, daß im Fahrzeugboden (1) eine Bajonettfassung ausgebildet ist und vom Zylinder (3) wenigstens ein Flansch (23) radial nach außen ragt, der das Gegenstück zur Bajonettfassung bildet und in sie einführbar und drehbar ist.

20. Fahrzeug nach Anspruch 19, dadurch gekennzeichnet, daß der Flansch (23) durch seitliches Umbiegen eines Teiles des Zylindermantels an dessen unterem Ende (11) gebildet ist.

21. Fahrzeug nach einem der Ansprüche 18 bis 20, dadurch gekennzeichnet, daß der Zylinder (3) nach unten hin stirnseitig offen ist.

22. Fahrzeug nach einem der Ansprüche 18 bis 21, dadurch gekennzeichnet, daß die Bajonettfassung in einem topfartigen, am Fahrzeugboden (1) befestigten Teil (25) ausgebildet ist, das sich durch die Ausnehmung erstreckt.

23. Fahrzeug nach einem der vorstehenden Ansprüche, gekennzeichnet durch eine Verdrehsicherung, die ein Verdrehen des am Fahrzeugboden (1) befestigten Gurtstraffers (2) verhindert.

24. Fahrzeug nach einem der vorstehenden Ansprüche, dadurch gekennzeichnet, daß der Gurtstraffer (2) ein Linearschloßstraffer ist.

25. Fahrzeug nach einem der vorstehenden Ansprüche, dadurch gekennzeichnet, daß die Ausnehmung zwischen nach unten vorstehenden Fahrzeugbodenabschnitten (40) und/oder unterhalb des Fahrzeugbodens vorgesehenen Fahrzeugteilen (45, 43) angeordnet ist.

## Claims

1. A vehicle, with a vehicle floor (1), with a belt tensioner (2) which comprises a piston/cylinder unit, and with a device for fastening the cylinder (3) to the vehicle floor (1), characterized in that the vehicle floor (1) has a recess into which the cylinder (3) at least partially projects.

2. The vehicle according to Claim 1, characterized in that the recess is configured and the positions of the fastening device and of the cylinder (3) are coordinated with each other such that the central axis (16) of a traction transfer means which connects the piston with a belt engaging device substantially corresponds to the course of the safety belt when it is worn.

3. The vehicle according to either of the preceding claims, characterized in that the recess is a downwardly extending trough (14) in the vehicle floor (1).

4. The vehicle according to Claim 3, characterized in that the trough is closed towards the bottom.

5. The vehicle according to Claim 4, characterized in that the trough has a ventilation opening (20).

6. The vehicle according to Claim 5, characterized in that the ventilation opening (20) is sealed and is only exposed in the case of restraint.

7. The vehicle according to Claim 1 or 2, characterized in that the recess is a port (22).

8. The vehicle according to any of the preceding claims, characterized in that the cylinder (3) has a lower end (11) which projects downwards out from the recess.

9. The vehicle according to Claim 8, characterized in that the end (11) projecting downwards from the recess is at least partially covered by a protective cap (19).

10. The vehicle according to Claim 9, characterized in that the cylinder (3) is open at its lower end (11) on the end face and the piston, during the tensioning process, exerts a force on the protective cap (19) which tears the protective cap (19) away from the cylinder (3).

11. The vehicle according to any of the preceding claims, characterized in that a radially projecting fastening means (13; 23; 39; 41) is provided as part of the fastening device on the exterior of the cylinder shell, which means (13; 23; 39; 41) is arrested on the vehicle floor (1).

12. The vehicle according to Claim 11, characterized in that the fastening means is a radial flange (39; 41).

13. The vehicle according to Claim 12, characterized in that the flange (39; 41) rests on the upper side of the vehicle floor (1) and is screwed to the vehicle floor (1).

14. The vehicle according to Claim 12, characterized in that the fastening means is a thread (13) provided externally on the cylinder shell, which thread (13) is screwed into a part which is fixed to the vehicle floor.

15. The vehicle according to Claim 14, characterized in that the recess has a counter-thread (15) corresponding to the thread (13), into which counter-thread (15) the cylinder (3) can be screwed.

16. The vehicle according to Claim 15, characterized in that the counter-thread (15) is formed by a nut (33) which is fastened to the vehicle floor (1).

17. The vehicle according to any of Claims 1 to 15, characterized in that the cylinder (3) is open downwards on the end face and has a thread (15) on the inner face of its cylinder shell, by which thread (15) it is turned onto a screw-like extension (35) on the vehicle floor (1).

18. The vehicle according to any of Claims 1 to 11, characterized in that the fastening device is constructed as a bayonet closure.

19. The vehicle according to Claim 18, characterized in that a bayonet fitting is constructed in the vehicle floor (1) and at least one flange (23) projects radially outwards from the cylinder (3), which flange (23) forms the counter-piece to the bayonet fitting and is able to be introduced and twisted into it.

20. The vehicle according to Claim 19, characterized in that the flange (23) is formed by lateral bending of a part of the cylinder shell at its lower end (11).

21. The vehicle according to any of Claims 18 to 20, characterized in that the cylinder (3) is open towards the bottom on the end face.

22. The vehicle according to any of Claims 18 to 21, characterized in that the bayonet fitting is constructed in a cup-like part (25) fastened to the vehicle floor (1), which part (25) extends through the recess.

23. The vehicle according to any of the preceding claims, characterized by a locking member which prevents rotation of the belt tensioner (2) which is fastened to the vehicle floor (1).

24. The vehicle according to any of the preceding claims, characterized in that the belt tensioner (2) is a linear buckle tensioner.

25. The vehicle according to any of the preceding claims, characterized in that the recess is arranged between downwardly projecting vehicle floor sections (40) and/or vehicle parts (45, 43) provided beneath the vehicle floor.

## Revendications

1. Véhicule, avec un plancher de véhicule (1), un tendeur de ceinture (2), qui comprend une unité constituée d'un piston et d'un cylindre, et un dispositif servant à fixer le cylindre (3) sur le plancher (1) du véhicule, caractérisé en ce que le plancher (1) du véhicule présente un évidement, dans lequel le cylindre (3) pénètre au moins en partie.

2. Véhicule selon la revendication 1, caractérisé en ce que l'évidement est formé d'une manière telle et les positions du dispositif de fixation et du cylindre (3) sont adaptées l'une à l'autre d'une manière telle, que l'axe médian (16) d'un moyen de transmission de la traction, qui relie le piston à un dispositif de saisie de la ceinture, correspond sensiblement au parcours de la ceinture de sécurité mise en place.

3. Véhicule selon l'une des revendications précédentes, caractérisé en ce que l'évidement est une cavité (14), qui s'étend vers le bas dans le plancher (1) du véhicule.

4. Véhicule selon la revendication 3, caractérisé en ce que la cavité est fermée vers le bas.

5. Véhicule selon la revendication 4, caractérisé en ce que la cavité a un orifice de ventilation (20).

6. Véhicule selon la revendication 5, caractérisé en ce que l'orifice de ventilation (20) est rendu étanche et n'est libéré qu'en cas de retenue.

7. Véhicule selon la revendication 1 ou 2, caractérisé en ce que l'évidement est un orifice de passage (22)

8. Véhicule selon l'une des revendications précédentes, caractérisé en ce que le cylindre (3) présente une extrémité inférieure (11), qui fait saillie vers le bas hors de l'évidement.

9. Véhicule selon la revendication 8, caractérisé en ce que l'extrémité (11), qui fait saillie vers le bas hors de l'évidement est recouverte par un capuchon de protection (19), du moins en partie.

10. Véhicule selon la revendication 9, caractérisé en ce que le cylindre (3) est ouvert à son extrémité inférieure (11), située du côté frontal, et lors du processus de raidissement le piston exerce sur le capuchon de protection (19) une force, qui arrache le capuchon de protection (19) du cylindre (3).

11. Véhicule selon l'une des revendications précédentes, caractérisé en ce que, sur le côté extérieur de l'enveloppe du cylindre il est prévu un moyen de fixation (13; 23; 39; 41) se dressant radialement, qui fait partie du dispositif de fixation, et qui est bloqué sur le plancher (11) du véhicule.

12. Véhicule selon la revendication 11, caractérisé en ce que le moyen de fixation est une bride radiale (39; 41).

13. Véhicule selon la revendication 12, caractérisé en ce que la bride (39; 41) repose sur le côté supérieur du plancher (1) du véhicule et est vissée sur le plancher (1) du véhicule.

14. Véhicule selon la revendication 12, caractérisé en ce que le moyen de fixation est un filetage (13), qui est prévu du côté extérieur sur l'enveloppe du cylindre, et qui est vissé dans une partie qui est solidaire du plancher du véhicule.

15. Véhicule selon la revendication 14, caractérisé en ce que l'évidement présente un filetage opposé correspondant au filetage (13), dans lequel on peut visser le cylindre (3).

16. Véhicule selon la revendication 15, caractérisé en ce que le filetage opposé (15) est formé par un écrou (33) qui est fixé sur le plancher du véhicule (1).

17. Véhicule selon l'une des revendications 1 à 15, caractérisé en ce que le cylindre (3) est ouvert vers le bas du côté frontal et a sur son enveloppe cylindrique du côté intérieur un filetage (15), avec lequel il tourne sur un prolongement (35) en forme de vis sur le plancher (1) du véhicule.

18. Véhicule selon l'une des revendications 1 à 11, caractérisé en ce que le dispositif de fixation est constitué sous la forme d'un accouplement à baïonnette.

19. Véhicule selon la revendication 18, caractérisé en ce qu'il est constitué dans le plancher du véhicule (1) une monture à baïonnette et en ce qu'à partir du cylindre (3) au moins une bride (23) fait saillie radialement vers l'extérieur, bride qui forme la contrepartie de la monture à baïonnette et peut être introduite et tourner dans celle-ci.

20. Véhicule selon la revendication 19, caractérisé en ce que la bride (23) est formée par un retournement latéral d'une partie de l'enveloppe du cylindre à son extrémité inférieure (11).

21. Véhicule selon l'une des revendications 18 à 20, caractérisé en ce que le cylindre (3) est ouvert vers le bas du côté frontal.

22. Véhicule selon l'une des revendications 18 à 21, caractérisé en ce que la monture à baïonnette est constituée dans une pièce (25), en forme de pot, qui est fixée sur le plancher (1) du véhicule, et s'étend à travers l'évidement.

23. Véhicule selon l'une des revendications précédentes, caractérisé par un blocage en rotation, qui empêche le tendeur de ceinture (2), qui est fixé sur le plancher du véhicule (1), de tourner.

24. Véhicule selon l'une des revendications précédentes, caractérisé en ce que le tendeur de ceinture (2) est un tendeur à serrure linéaire.

25. Véhicule selon l'une des revendications précédentes, caractérisé en ce que l'évidement est disposé entre des sections (40) du plancher du véhicule qui font saillie vers le bas et/ou des parties du véhicule (45, 43) qui sont prévues en dessous du plancher du véhicule.
